(19) Europäisches Patentamt
European Patent Office
Office européen des brevets

(11) **EP 3 600 799 B1**

(12) **EUROPEAN PATENT SPECIFICATION**

(45) Date of publication and mention
of the grant of the patent:
**04.05.2022 Bulletin 2022/18**

(21) Application number: **17903025.9**

(22) Date of filing: **28.03.2017**

(51) International Patent Classification (IPC):
**B25J 9/16** *(2006.01)*          **B25J 19/00** *(2006.01)*
**G05B 19/4065** *(2006.01)*     **G05B 23/02** *(2006.01)*

(52) Cooperative Patent Classification (CPC):
**B25J 9/1674; B25J 19/0095;** G05B 19/4065;
G05B 23/0283

(86) International application number:
**PCT/CN2017/078391**

(87) International publication number:
**WO 2018/176212 (04.10.2018 Gazette 2018/40)**

## (54) METHOD, APPARATUS AND SYSTEM FOR MONITORING INDUSTRIAL ROBOT

VERFAHREN, VORRICHTUNG UND SYSTEM ZUR ÜBERWACHUNG EINES INDUSTRIEROBOTERS

PROCÉDÉ, APPAREIL ET SYSTÈME DE SURVEILLANCE D'UN ROBOT INDUSTRIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.02.2020 Bulletin 2020/06**

(73) Proprietor: **ABB Schweiz AG
5400 Baden (CH)**

(72) Inventors:
• **ORMAN, Maciej
Mumbai
Maharashtra 400053 (IN)**
• **SUN, Heqing
Shanghai 201319 (CN)**
• **LI, Shunchong
Shanghai 200232 (CN)**

(74) Representative: **Zimmermann & Partner
Patentanwälte mbB
Postfach 330 920
80069 München (DE)**

(56) References cited:
WO-A1-98/23037          WO-A1-2013/071285
CN-A- 104 568 444      CN-A- 105 549 598
CN-A- 105 784 366      JP-A- 2013 156 062
US-A1- 2005 096 873    US-A1- 2011 238 329

• **WANG ZHILE ET AL: "Sun gear fault diagnosis based on windowed synchronous average in angle domain", 2016 IEEE INTERNATIONAL CONFERENCE ON INFORMATION AND AUTOMATION (ICIA), IEEE, 1 August 2016 (2016-08-01), pages 785-790, XP033053526, DOI: 10.1109/ICINFA.2016.7831926 [retrieved on 2017-01-24]**

**Description**

**FIELD OF INVENTION**

The present disclosure relates to the technical field of industrial robots, and more specifically, to a method, apparatus and system for monitoring an industrial robot.

**BACKGROUND OF INVENTION**

In the working process of an industrial robot, robot downtime caused by a fault will lead to a large economic loss. Therefore, there is a need to monitor the working state of the robot so as to detect hidden trouble as early as possible.

The prior art may obtain data of a motor controlling the rotation of the robot's axis, such as the motor's rotation speed, torque and the like, so as to monitor whether the industrial robot works normally.

However, attributes of the above data determine hidden trouble of the robot could not be detected in the early days. The article "Sun gear fault diagnosis based on windowed synchronous average in angle domain" of Wang Zhile et.al was published in the "Proceedings of the IEEE- International Conference on Information and Automation" on pages 785 to 790.

Besides, the prior art first makes the industrial robot stop working, and then causes the robot's rotation axis to rotate at a constant speed so as to obtain signals from which hidden trouble may be discovered. Obviously the solution is disadvantageous as the robot has to stop working first of all.

**SUMMARY OF INVENTION**

It is an objective of the present disclosure to provide a method, apparatus and system for monitoring an industrial robot, so as to solve the above-mentioned technical problems in the prior art.

The invention is defined by the method of independent claim 1, apparatus of independent claim 7 and system of dependent claim 13. Optional aspects of the invention are provided by the dependent claims.

With the method, apparatus and system for monitoring an industrial robot as provided by the present disclosure, hidden trouble can be discovered earlier without shutting down the industrial robot.

**BRIEF DESCRIPTION OF THE DRAWINGS**

A better understanding of the present invention may be obtained from description of embodiments of the present invention, with reference to the accompanying drawings, wherein:

FIG. 1 schematically shows a flowchart of a method for monitoring an industrial robot according to one embodiment of the present invention;

FIG. 2 schematically shows a time-domain waveform graph of a first signal according to one embodiment;

FIG. 3 schematically shows a time-domain waveform graph of a second signal according to one embodiment;

FIG. 4 schematically shows a flowchart of converting the second signal to a stationary signal during monitoring an industrial robot according to one embodiment of the present invention;

FIG. 5 schematically shows a flowchart of calculating a resampling time point during converting the second signal to a stationary signal according to one embodiment of the present invention;

FIG. 6 schematically shows a schematic view of a relation between a signal value and mean value of the first signal according to one embodiment;

FIG. 7 schematically shows a schematic view of sampling intervals of the second signal according to one embodiment;

FIG. 8 schematically shows a time-domain waveform graph of a third signal according to one embodiment;

FIG. 9 schematically shows a block diagram of an apparatus for monitoring an industrial robot according to one embodiment of the present invention; and

FIG. 10 schematically shows a block diagram of a system for monitoring an industrial robot according to one embodiment of the present invention.

## DETAILED DESCRIPTION OF EMBODIMENTS

Detailed illustration will be presented to exemplary embodiments, which have been illustrated in the accompanying drawings. Unless otherwise indicated, when the description below involves figures, same numbers indicate same or similar elements in different figures. Implementations to be described in the exemplary embodiments do not represent all implementations that are consistent with the present disclosure. On the contrary, they are merely examples of an apparatus and method consistent with some aspects of the present disclosure as specified in the appended claims.

The terminology used in the present disclosure is merely for the purpose of describing specific embodiments, rather than limiting the present disclosure. The singular and plural forms of "one", "said" and "the" used in the present disclosure and the appended claims are also intended to include the majority form, unless other meaning is explicitly indicated in the context. It should be further appreciated the term "and/or" used herein refers to and includes any or all possible combinations of one or more correlated enumerated items.

It should be appreciated although in the present disclosure various information might be described using the terms first, second, third and the so on, the information should not be limited to these terms, which actually are merely used to distinguish the same type of information. For example, without departing from the scope of the present disclosure, hereinafter one of two categories may be referred to as a first category or a second category, and similarly, the other of the two categories may be referred to as a second category or a first category. Depending on the context, the word "if' as used herein may be interpreted as "at the time of ...", "when ..." or "in response to determining ...".

To enable those skilled in the art to better understand the present disclosure, further detailed illustration is presented below to the present disclosure with reference to the accompanying drawings and concrete implementations.

The present invention first discloses a method for monitoring an industrial robot.

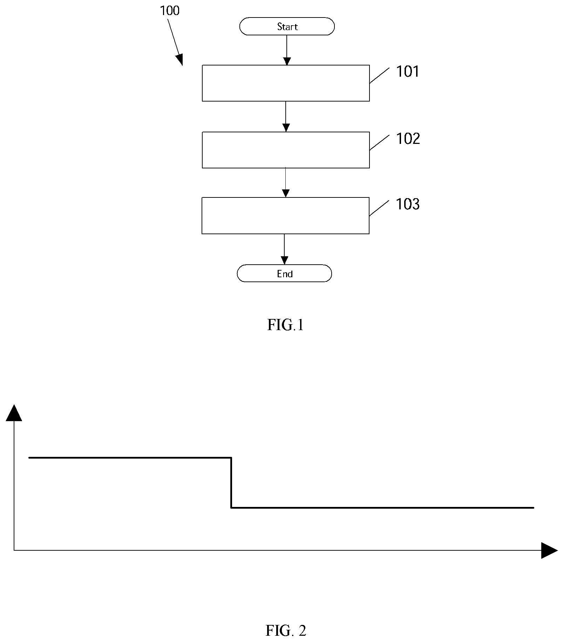

With reference to FIG. 1, this figure schematically shows a flowchart of a method 100 for monitoring an industrial robot according to the present invention. As shown in FIG. 1, the method 100 comprises steps 101 to 103.

In step 101, synchronously obtaining a first signal containing motion information of a rotary component of the industrial robot and a second signal containing condition information of a rotary component of the industrial robot.

A controller of the robot may generate a triggering signal to obtain the first signal containing motion information of a rotary component of the robot. Therefore, according to one embodiment of the present invention, the second signal may be obtained using the triggering signal, thereby achieving the synchronous obtaining of the first signal and the second signal. According to one embodiment of the present invention, the obtained first signal and second signal may be discrete signals.

According to one embodiment of the present invention, the first signal may be any signal containing the motion information of a rotary component of the robot. The motion information may be the rotation speed or the angle position or the angular acceleration of the rotary component. The rotary component may be a motor driving the axis to rotate, or a gearbox driving the axis to rotate, or a bearing supporting the axis to rotate. There's no difference between the first signal obtained from a non-defective robot and the first signal obtained from a defective robot.

According to one embodiment of the present invention, the second signal may be any signal containing condition information of a rotary component of the industrial robot. The condition information may be vibration or current intensity or torque or magnetic field strength or sound or strain of the rotary component. The amplitude of the second signal obtained from a non-defective robot is different from the amplitude of the second signal obtained from a defective robot.

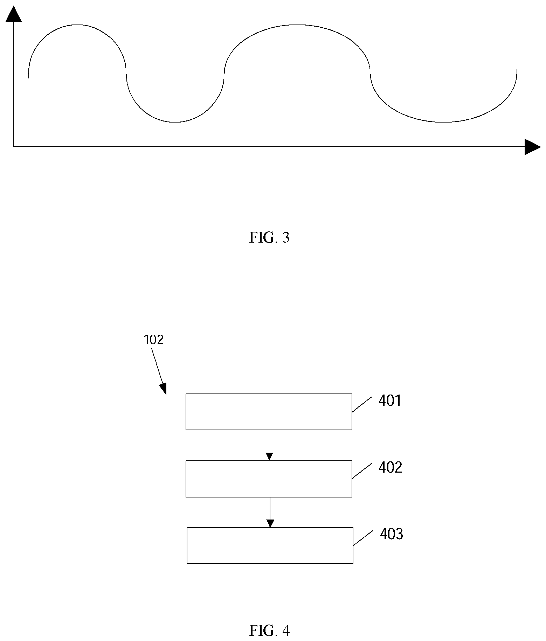

According to one embodiment of the present invention, at least one parameter of the second signal varies linearly as one parameter of the first signal varies. FIG. 2 schematically shows a time-domain waveform graph of a first signal according to one embodiment, and FIG. 3 schematically shows a time-domain waveform graph of a second signal according to one embodiment. It can be seen by comparing FIG. 2 with FIG. 3 that the second signal is usually a non-stationary signal, and at least one parameter of the second signal will change linearly as one parameter of the first signal changes. For example, the cycle of the second signal will vary linearly as the signal value of the first signal varies.

According to one embodiment of the present invention, if Y represents the at least one parameter of the second signal, X represents the one parameter of the first signal, then, the linear variation relationship between Y and X can be described as : $Y = aX + b$, wherein a and b are constants. Those who are skilled in the art should understand that the linear variation between Y and X may be strictly linear or substantially linear.

In step 102, the second signal is converted to a stationary signal according to the first signal.

According to the present invention, with reference to FIG. 4, this figure schematically shows a flowchart of step 102 of converting the second signal to a stationary signal during monitoring an industrial robot according to the present invention. As shown in FIG. 4, step 102 comprises sub-steps 401 to 403 as below.

In sub-step 401, a resampling time point is calculated according to an initial sampling interval of the second signal and a signal value of the first signal.

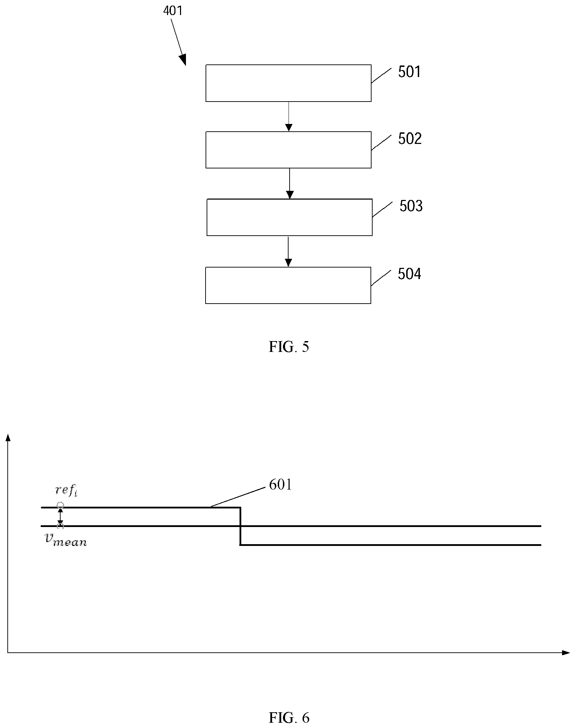

As shown in FIG. 5, typically the initial sampling interval $dx_i$ of the second signal may be uniform. In order to convert the non-stationary second signal to a stationary signal that is easy to analyze and process subsequently, resampling may be performed to the second signal at non-uniform intervals.

According to one embodiment of the present invention, with reference to FIG. 5, this figure schematically shows a flowchart of sub-step 401 of calculating a resampling time point of the second signal during converting the second signal to a stationary signal according to one embodiment of the present invention. As shown in FIG. 5, sub-step 401 may comprise sub-steps 501 to 504 as below.

In sub-step 501, a mean value of signal values of the first signal is calculated.

According to one embodiment of the present invention, as shown in FIG. 6, an arithmetic mean value $v_{mean}$ may be calculated according to signal values $ref_i$ of the first signal 601.

In sub-step 502, a ratio of the signal value to the mean value of the first signal is calculated.

According to one embodiment of the present invention, the ratio $r_i$ may be calculated according to Equation (1) below:

$$r_i = \frac{ref_i}{v_{mean}} \qquad (1)$$

In sub-step 503, a resampling interval is calculated according to the ratio and the initial sampling interval of the second signal.

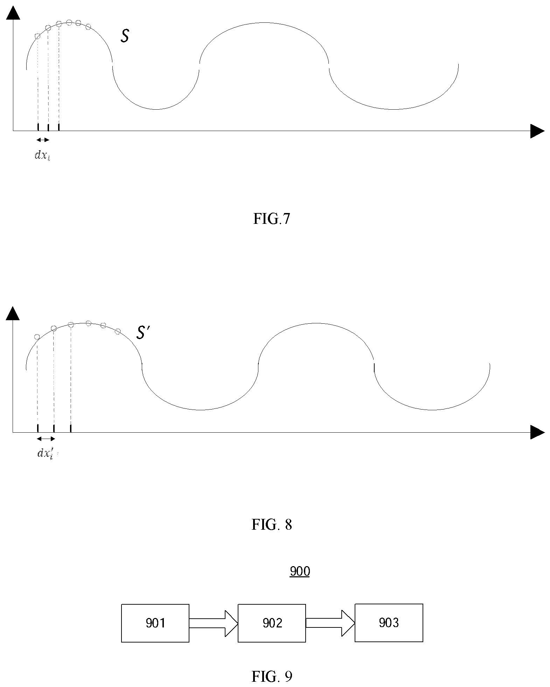

FIG. 7 shows one embodiment of the second signal $S$, whose sampling interval $dx_i$ is uniform.

According to one embodiment of the present invention, the resampling interval may be calculated according to Equation (2) below:

$$dx_i^{'} = dx_i + dx_i(1 - r_i) \qquad (2)$$

wherein $dx_i^{'}$ is the resampling interval, and $dx_i$ is the initial sampling interval of the second signal.

In sub-step 504, the resampling time point is calculated according to the resampling interval.

According to one embodiment of the present invention, the resampling time point may be calculated according to Equation (3) below:

$$t_i^{'} = \sum_{i=1}^{n} dx_i^{'} \qquad (3)$$

wherein $t_i^{'}$ is the resampling time point.

In sub-step 402, the second signal is resampled according to the resampling time point, so as to obtain a third signal.

The second signal may be resampled at a corresponding resampling time point, so as to obtain a third signal. As shown in FIG. 8, the third signal $S'$ obtained as such is stationary, whereas its sampling interval $dx_i^{'}$ is non-uniform.

In sub-step 403, the third signal is interpolated so as to obtain a stationary signal with uniform intervals.

Since the sampling intervals of the third signal obtained in sub-step 402 is non-uniform, the third signal with non-uniform sampling intervals may be converted to a stationary signal with uniform sampling intervals, by using any interpolation method.

In step 103, the industrial robot is monitored according to the stationary signal.

According to one embodiment of the present invention, any method for frequency-domain analysis of the stationary signal may be used to judge whether the operation of the robot is abnormal, and further monitor the robot.

Description has been presented above to the method for monitoring an industrial robot according to the embodiments of the present invention. The method of the present invention can monitor working conditions of the robot and discover hidden trouble of the robot in the early days, without shutting down the robot.

The present invention further provides an apparatus for monitoring an industrial robot.

With reference to FIG. 9, this figure schematically shows a block diagram of an apparatus 900 for monitoring an industrial robot according to the present invention. As shown in FIG. 9, the apparatus comprises : a signal obtaining module 901 arranged to synchronously obtaining a first signal containing motion information of a rotary component of the industrial robot and a second signal containing condition information of a rotary component of the industrial robot; a signal converting module 902 arranged to convert the second signal to a stationary signal according to the first signal; and a monitoring sub-module 903 arranged to monitor the industrial robot according to the stationary signal.

According to one embodiment of the present invention, at least one parameter of said second signal varies linearly as one parameter of said first signal varies.

According to the present invention, the signal converting module 902 comprises: : a resampling time point calculating module arranged to calculate a resampling time point according to an initial sampling interval of the second signal and signal values of the first signal; a third signal generating module arranged to resample the second signal according to the resampling time point, so as to obtain a third signal; and a stationary signal generating module arranged to interpolate the third signal so as to obtain a stationary signal with uniform intervals.

According to one embodiment of the present invention, the resampling time point calculating module may further comprise: a mean value calculating module arranged to calculate a mean value of signal values of the first signal; a ratio calculating module arranged to calculate a ratio of a signal value of the first signal to the mean value; a resampling interval calculating module arranged to calculate a resampling interval according to the ratio and the initial sampling interval of the second signal; and a resampling time point calculating sub-module arranged to calculate the resampling time point according to the resampling interval.

Description has been presented above to the apparatus for monitoring an industrial robot according to the embodiments of the present invention. The apparatus of the present invention can monitor working conditions of the robot and discover hidden trouble of the robot in the early days, without shutting down the robot.

The present invention further provides a system for monitoring an industrial robot.

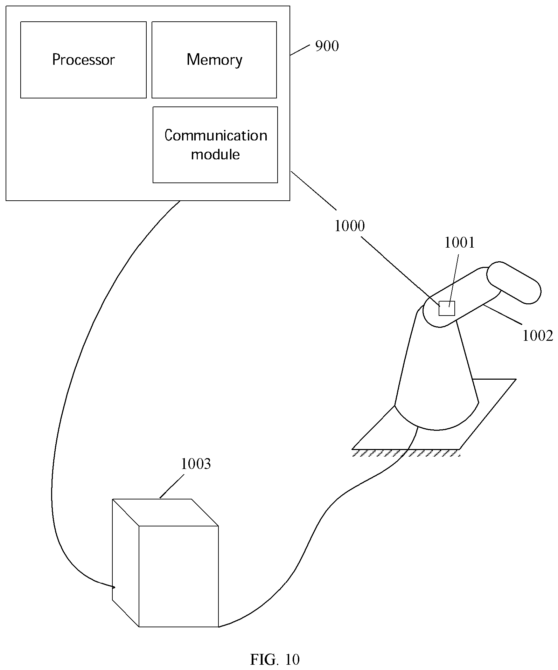

With reference to FIG. 10, this figure schematically shows a block diagram of a system 1000 for monitoring an industrial robot according to one embodiment of the present invention. As shown in FIG. 10, the system 1000 may comprise: an apparatus 900 for monitoring an industrial robot according to the present invention, which is connected with a controller 1003 of the industrial robot so as to obtain a first signal from the controller; at least one sensing module 1001 located on an arm 1002 of the industrial robot and arranged to obtain a second signal, which may perform data communication with the apparatus 900.

According to one embodiment of the present invention, the apparatus 900 for monitoring an industrial robot may be embodied in an information processing device in the form of a computer program, which information processing device may comprise a processor, a memory and a data communication module. The memory may have the computer program stored therein, which may accomplish functions of the various modules in the apparatus 900. The processor may read and execute the computer program. The data communication module may be used for wired or wireless data communication between the information processing device and the controller 1003 of the robot, and further may be used for wired or wireless data communication between the information processing device and the sensing module 1001.

According to one embodiment of the present invention, the sensing module 1001 may comprise a sensor, a memory and a data communication module. The sensor may be an accelerometer, a magnetometer, a microphone, or a torque meter. The memory may be used for storing data obtained by the sensor, and the data communication module may be used for wired or wireless data communication with the information processing device.

When monitoring the industrial robot, the sensing module 1001 may be attached to an arm of the industrial robot, to connect a data transmission channel between the information processing device and the controller 1003 of the robot and also a data transmission channel between the information processing device and the sensing module 1001. The information processing device may synchronously control the sensing module 1001 to collect the second signal, by using a triggering signal for collecting the first signal as issued by the controller 1003 of the robot. Then, the second signal from the sensing module 1001 is converted to a stationary signal according to the first signal from the controller 1003 of the robot, and domain-frequency analysis is performed to the stationary signal to discover hidden trouble and further monitor conditions of the robot.

The basic principle of the present disclosure has been described above with reference to concrete embodiments. However, it should be pointed out those of ordinary skill in the art may appreciate all or any steps or components of the method and apparatus of the present disclosure may be implemented as hardware, firmware, software or a combination thereof in any computing device (including a processor, storage media, etc.) or any network of computing device. This is well within reach of those of ordinary skill in the art with the exercise of basic programming skills upon read of illustration of the present disclosure.

Therefore, the objective of the present disclosure may also be achieved by running one program or a set of programs on any computing device that would be a known general-purpose device. Therefore, the objective of the present disclosure may further be achieved only by providing a program product containing program code for implementing the method or apparatus. That is, such a program product also constitutes the present disclosure, and moreover a storage medium storing such a program product constitutes the present disclosure. Obviously the storage medium may be any storage medium that is well known or to be developed later.

The foregoing concrete embodiments should by no way limit the protection scope of the present disclosure, which is defined by the appended claims. Those skilled in the art should understand various modifications, combinations, sub-combinations and replacements may be made depending upon design requirements and other factors.

**Claims**

1. A method (100) for monitoring an industrial robot, **characterized by** comprising:

   synchronously obtaining (101) a first signal containing motion information of a rotary component of said industrial robot and a second signal containing condition information of a rotary component of said industrial robot;
   converting (102) said second signal to a stationary signal according to said first signal; and
   monitoring (103) said industrial robot according to said stationary signal;

   wherein the step of converting (102) said second signal to a stationary signal further comprises:

   calculating (401) a resampling time point according to an initial sampling interval of said second signal and signal values of said first signal;
   resampling (402) said second signal according to said resampling time point, so as to obtain a third signal; and
   interpolating (403) said third signal so as to obtain a stationary signal with uniform sampling intervals.

2. The method according to Claim 1, **characterized in that** at least one parameter of said second signal varies linearly as one parameter of said first signal varies.

3. The method according to Claim 1, **characterized in that** the step of calculating a resampling time point further comprises:

   calculating (501) a mean value of signal values of said first signal;
   calculating (502) a ratio of a signal value of said first signal to said mean value;
   calculating (503) a resampling interval according to said ratio and the initial sampling interval of said second signal; and
   calculating (504) said resampling time point according to said resampling interval.

4. The method according to Claim 1, **characterized in that** the motion information is a rotation speed or an angle position or an angular acceleration of the rotary component.

5. The method according to Claim 1, **characterized in that** the condition information is a vibration or a current intensity or a torque or a magnetic field strength or a sound or a strain of the rotary component.

6. The method according to Claim 1, **characterized in that** the rotary component is a motor driving the axis to rotate, or a gearbox driving the axis to rotate, or a bearing supporting the axis to rotate.

7. An apparatus (900) for monitoring an industrial robot, **characterized by** comprising:

   a signal obtaining module (901) arranged to synchronously obtaining a first signal containing motion information of a rotary component of said industrial robot and a second signal containing condition information of a rotary component of said industrial robot;
   a signal converting module (902) arranged to convert said second signal to a stationary signal according to said first signal; and
   a monitoring sub-module (903) arranged to monitor said industrial robot according to said stationary signal, wherein said signal converting module (902) further comprises:

   a resampling time point calculating module arranged to calculate a resampling time point according to an initial sampling interval of said second signal and signal values of said first signal;
   a third signal generating module arranged to resample said second signal according to said resampling time point, so as to obtain a third signal; and

a stationary signal generating module arranged to interpolate said third signal so as to obtain a stationary signal with uniform sampling intervals.

8. The apparatus according to Claim 7, **characterized in that** at least one parameter of said second signal varies linearly as one parameter of said first signal varies.

9. The apparatus according to Claim 7, **characterized in that** said resampling time point calculating module further comprises:

a mean value calculating module arranged to calculate a mean value of signal values of said first signal;
a ratio calculating module arranged to calculate a ratio of a signal value of said first signal to said mean value;
a resampling interval calculating module arranged to calculate a resampling interval according to said ratio and the initial sampling interval of said second signal; and
a resampling time point calculating sub-module arranged to calculate said resampling time point according to said resampling interval.

10. The apparatus according to Claim 7, **characterized in that** the motion information is a rotation speed or an angle position or an angular acceleration of the rotary component.

11. The apparatus according to Claim 7, **characterized in that** the condition information is a vibration or a current intensity or a torque or a magnetic field strength or a sound or a strain of the rotary component.

12. The apparatus according to Claim 7, **characterized in that** the rotary component is a motor driving the axis to rotate, or a gearbox driving the axis to rotate, or a bearing supporting the axis to rotate.

13. A system (1000) for monitoring an industrial robot, **characterized by** comprising:

an apparatus (900) according to any of Claims 7 to 12, which is connected with a controller (1003) of said industrial robot so as to obtain a first signal from said controller (1003);
at least one sensing module (1001) located on an arm of said industrial robot and arranged to obtain a second signal, which may perform data communication with said apparatus (900).

**Patentansprüche**

1. Verfahren (100) zur Überwachung eines Industrieroboters, **dadurch gekennzeichnet, dass** es umfasst:

synchrones Empfangen (101) eines ersten Signals, das Bewegungsinformationen einer rotierenden Komponente des Industrieroboters enthält, und eines zweiten Signals, das Zustandsinformationen einer rotierenden Komponente des Industrieroboters enthält;
Umwandlung (102) des zweiten Signals in ein stationäres Signal gemäß dem ersten Signal; und
Überwachen (103) des Industrieroboters gemäß dem stationären Signal;

wobei der Schritt des Umwandelns (102) des zweiten Signals in ein stationäres Signal ferner umfasst:

Berechnen (401) eines Wiederabtastzeitpunkts gemäß einem anfänglichen Abtastintervall des zweiten Signals und Signalwerten des ersten Signals;
Wiederabtasten (402) des zweiten Signals gemäß dem Wiederabtastzeitpunkt, um ein drittes Signal zu erhalten; und
Interpolieren (403) des dritten Signals, um ein stationäres Signal mit einheitlichen Abtastintervallen zu erhalten.

2. Verfahren nach Anspruch 1, **dadurch gekennzeichnet, dass** mindestens ein Parameter des zweiten Signals linear variiert, wenn ein Parameter des ersten Signals variiert.

3. Verfahren nach Anspruch 1, **dadurch gekennzeichnet, dass** der Schritt des Berechnens eines Wiederabtastzeitpunktes ferner umfasst:

Berechnen (501) eines Mittelwertes von Signalwerten des ersten Signals;

7

Berechnen (502) eines Verhältnisses eines Signalwertes des ersten Signals zu dem Mittelwert;
Berechnen (503) eines Wiederabtastintervalls gemäß dem Verhältnis und dem anfänglichen Abtastintervall des zweiten Signals; und
Berechnen (504) des Wiederabtastzeitpunkts gemäß dem Wiederabtastintervall.

4. Verfahren nach Anspruch 1, **dadurch gekennzeichnet, dass** die Bewegungsinformation eine Drehgeschwindigkeit oder eine Winkelposition oder eine Winkelbeschleunigung der rotierenden Komponente ist.

5. Verfahren nach Anspruch 1, **dadurch gekennzeichnet, dass** die Zustandsinformation eine Vibration oder eine Stromstärke oder ein Drehmoment oder eine Magnetfeldstärke oder ein Schall oder eine Dehnung der rotierenden Komponente ist.

6. Verfahren nach Anspruch 1, **dadurch gekennzeichnet, dass** die rotierende Komponente ein Motor ist, der die Achse zur Drehung antreibt, oder ein Getriebe, das die Achse zur Drehung antreibt, oder ein Lager, das die Achse zur Drehung trägt.

7. Vorrichtung (900) zur Überwachung eines Industrieroboters, **dadurch gekennzeichnet, dass** sie Folgendes umfasst:

ein Signalerhaltungsmodul (901), das angeordnet ist, synchron ein erstes Signal, das Bewegungsinformationen einer rotierenden Komponente des Industrieroboters enthält, und ein zweites Signal, das Zustandsinformationen einer rotierenden Komponente des Industrieroboters enthält, zu erhalten;
ein Signalumwandlungsmodul (902), das angeordnet ist, das zweite Signal in ein stationäres Signal gemäß dem ersten Signal umzuwandeln; und
ein Überwachungsuntermodul (903), das angeordnet ist, den Industrieroboter gemäß dem stationären Signal zu überwachen,

wobei das Signalumwandlungsmodul (902) ferner umfasst:

ein Modul zur Berechnung des Wiederabtastzeitpunkts, das angeordnet ist, einen Wiederabtastzeitpunkt gemäß einem anfänglichen Abtastintervall des zweiten Signals und Signalwerten des ersten Signals zu berechnen;
ein drittes Signalerzeugungsmodul, das angeordnet ist, das zweite Signal gemäß dem Wiederabtastzeitpunkt neu abzutasten, um so ein drittes Signal zu erhalten; und
ein Modul zur Erzeugung eines stationären Signals, das angeordnet ist, das dritte Signal zu interpolieren, um ein stationäres Signal mit gleichmäßigen Abtastintervallen zu erhalten.

8. Vorrichtung nach Anspruch 7, **dadurch gekennzeichnet, dass** mindestens ein Parameter des zweiten Signals linear variiert, wenn ein Parameter des ersten Signals variiert.

9. Vorrichtung nach Anspruch 7, **dadurch gekennzeichnet, dass** das Modul zur Berechnung des Wiederabtastzeitpunkts ferner umfasst:

ein Modul zur Berechnung des Mittelwerts, das angeordnet ist, einen Mittelwert von Signalwerten des ersten Signals zu berechnen;
ein Modul zur Berechnung des Verhältnisses, das angeordnet ist, ein Verhältnis eines Signalwertes des ersten Signals zu dem Mittelwert zu berechnen;
ein Modul zur Berechnung des Wiederabtastintervalls, das angeordnet ist, ein Wiederabtastintervall gemäß dem Verhältnis und dem anfänglichen Abtastintervall des zweiten Signals zu berechnen; und
ein Untermodul zur Berechnung des Wiederabtastzeitpunkts, das angeordnet ist, den Wiederabtastzeitpunkt gemäß dem Wiederabtastintervall zu berechnen.

10. Vorrichtung nach Anspruch 7, **dadurch gekennzeichnet, dass** die Bewegungsinformation eine Drehgeschwindigkeit oder eine Winkelposition oder eine Winkelbeschleunigung der rotierenden Komponente ist.

11. Vorrichtung nach Anspruch 7, **dadurch gekennzeichnet, dass** die Zustandsinformation eine Vibration oder eine Stromstärke oder ein Drehmoment oder eine Magnetfeldstärke oder ein Schall oder eine Dehnung der rotierenden Komponente ist.

**12.** Vorrichtung nach Anspruch 7, **dadurch gekennzeichnet, dass** die rotierende Komponente ein Motor ist, der die Achse zur Drehung antreibt, oder ein Getriebe, das die Achse zur Drehung antreibt, oder ein Lager, das die Achse zur Drehung trägt.

**13.** System (1000) zur Überwachung eines Industrieroboters, **dadurch gekennzeichnet, dass** es umfasst:

eine Vorrichtung (900) nach einem der Ansprüche 7 bis 12, die mit einer Steuerung (1003) des Industrieroboters verbunden ist, um ein erstes Signal von der Steuerung (1003) zu erhalten;
mindestens ein Sensormodul (1001), das sich an einem Arm des Industrieroboters befindet und angeordnet ist, ein zweites Signal zu empfangen, das eine Datenverbindung mit der Vorrichtung (900) herstellen kann.

**Revendications**

**1.** Procédé (100) de surveillance d'un robot industriel, **caractérisé en ce qu'**il comprend :

la réception synchrone (101) d'un premier signal contenant des informations de mouvement d'un composant rotatif du robot industriel et d'un deuxième signal contenant des informations d'état d'un composant rotatif du robot industriel ;
convertir (102) le deuxième signal en un signal stationnaire conformément au premier signal ; et
surveiller (103) le robot industriel conformément au signal stationnaire ;

dans lequel l'étape de conversion (102) du deuxième signal en un signal stationnaire comprend en outre :

calculer (401) un instant de rééchantillonnage selon un intervalle d'échantillonnage initial du second signal et des valeurs de signal du premier signal ;
rééchantillonner (402) le deuxième signal en fonction de l'instant de rééchantillonnage afin d'obtenir un troisième signal ; et
interpoler (403) le troisième signal pour obtenir un signal stationnaire avec des intervalles d'échantillonnage uniformes.

**2.** Procédé selon la revendication 1, **caractérisé en ce qu'**au moins un paramètre du deuxième signal varie linéairement lorsqu'un paramètre du premier signal varie.

**3.** Procédé selon la revendication 1, **caractérisé en ce que** l'étape de calcul d'un instant de rééchantillonnage comprend en outre :

Calcul (501) d'une valeur moyenne de valeurs de signal du premier signal ;
Calculer (502) un rapport entre une valeur de signal du premier signal et la valeur moyenne;
calculer (503) un intervalle de rééchantillonnage selon le rapport et l'intervalle d'échantillonnage initial du second signal ; et
calculer (504) l'instant de rééchantillonnage selon l'intervalle de rééchantillonnage.

**4.** Procédé selon la revendication 1, **caractérisé en ce que** l'information de mouvement est une vitesse de rotation ou une position angulaire ou une accélération angulaire du composant rotatif.

**5.** Procédé selon la revendication 1, **caractérisé en ce que** l'information d'état est une vibration ou une intensité ou un couple ou une intensité de champ magnétique ou un bruit ou un allongement du composant rotatif.

**6.** Procédé selon la revendication 1, **caractérisé en ce que** le composant rotatif est un moteur qui entraîne l'axe en rotation, ou un engrenage qui entraîne l'axe en rotation, ou un palier qui supporte l'axe en rotation.

**7.** Dispositif (900) de surveillance d'un robot industriel, **caractérisé en ce qu'**il comprend :

un module de maintien de signal (901) agencé pour maintenir de manière synchrone un premier signal contenant des informations de mouvement d'un composant rotatif du robot industriel et un deuxième signal contenant des informations d'état d'un composant rotatif du robot industriel ;
un module de conversion de signal (902) agencé pour convertir le deuxième signal en un signal stationnaire conformément au premier signal ; et
un sous-module de surveillance (903) agencé pour surveiller le robot industriel conformément au signal stationnaire,

dans lequel le module de conversion de signal (902) comprend en outre :

un module de calcul de l'instant de rééchantillonnage, agencé pour calculer un instant de rééchantillonnage selon un intervalle d'échantillonnage initial du deuxième signal et des valeurs de signal du premier signal ;
un troisième module de génération de signal agencé pour rééchantillonner le deuxième signal en fonction de l'instant de rééchantillonnage, de manière à obtenir un troisième signal ; et
un module de génération de signal stationnaire agencé pour interpoler le troisième signal afin d'obtenir un signal stationnaire avec des intervalles d'échantillonnage uniformes.

8. Dispositif selon la revendication 7, **caractérisé en ce qu'**au moins un paramètre du deuxième signal varie linéairement lorsqu'un paramètre du premier signal varie.

9. Dispositif selon la revendication 7, **caractérisé en ce que** le module de calcul de l'instant de rééchantillonnage comprend en outre :

un module de calcul de la valeur moyenne agencé pour calculer une valeur moyenne de valeurs de signal du premier signal ;
un module de calcul du rapport, agencé pour calculer un rapport entre une valeur de signal du premier signal et la valeur moyenne ;
un module de calcul de l'intervalle de rééchantillonnage, agencé pour calculer un intervalle de rééchantillonnage en fonction du rapport et de l'intervalle d'échantillonnage initial du second signal ; et
un sous-module de calcul de l'instant de rééchantillonnage agencé pour calculer l'instant de rééchantillonnage selon l'intervalle de rééchantillonnage.

10. Dispositif selon la revendication 7, **caractérisé en ce que** l'information de mouvement est une vitesse de rotation ou une position angulaire ou une accélération angulaire du composant rotatif.

11. Dispositif selon la revendication 7, **caractérisé en ce que** l'information d'état est une vibration ou une intensité ou un couple ou une intensité de champ magnétique ou un bruit ou un allongement du composant rotatif.

12. Dispositif selon la revendication 7, **caractérisé en ce que** le composant rotatif est un moteur qui entraîne l'axe en rotation, ou un engrenage qui entraîne l'axe en rotation, ou un palier qui supporte l'axe en rotation.

13. Système (1000) de surveillance d'un robot industriel, **caractérisé en ce qu'**il comprend :

un dispositif (900) selon l'une des revendications 7 à 12, relié à une commande (1003) du robot industriel pour recevoir un premier signal de la commande (1003) ;
au moins un module de détection (1001) situé sur un bras du robot industriel et agencé pour recevoir un deuxième signal apte à établir une liaison de données avec le dispositif (900).

FIG.1

FIG. 2

FIG. 3

FIG. 4

401

501

502

503

504

FIG. 5

$ref_i$

601

$v_{mean}$

FIG. 6

FIG.7

FIG. 8

900

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG ZHILE.** Sun gear fault diagnosis based on windowed synchronous average in angle domain. *Proceedings of the IEEE- International Conference on Information and Automation,* 785-790